# EUROPEAN PATENT APPLICATION

(11) **EP 0 962 407 A1**
(43) Date of publication of application: **08.12.1999**
(21) Application number: 98901082.2
(22) Date of filing: 30.01.1998
(51) Int. Cl.: B65G 47/49, G06K 17/00, G07B 15/00

(54) **IC CARD SYSTEM, TRANSPORTATION SYSTEM, AND COMMUNICATION EQUIPMENT**

(30) Priority: 26.02.1997 JP 4175697
(71) Applicant: Rohm Co., Ltd., Kyoto-shi Kyoto 615-8585 (JP)
(72) Inventor: OKADA, Hiroharu, Ukyo-ku Kyoto-shi Kyoto 615-8585 (JP)
(74) Representative: Prüfer, Lutz H., Dipl.-Phys.
(86) International application number: JP9800415
(87) International publication number: WO9838120

(57) **Abstract**

A transport system is configured of a mobile unit (40, 40') attached with a non-contact type IC card (10a, 10a') absent of a power source, receiving and rectifying a radio wave to obtain power to operate; an interrogator body 20 having an antenna unit (21b) to transmit the radio wave and data, and transferring data with the IC card (10a); and a travel control device 30 controlling a travel direction of a mobile unit according to a control signal from interrogator body 20. The antenna unit (21b) is attached to a react unit (21a) that reacts when in contact with the mobile unit (40). The distance between the IC card attached to the mobile unit and the antenna unit of the interrogator can be reduced significantly than that of the conventional case irrelevant to the shape and size of the mobile unit. By supplying from the antenna unit (21b) the weakest radio wave required for the IC card that transfers data, a transport system can be provided that can transfer data efficiently and without almost no interference.

## Description

### Technical Field

The present invention relates to an IC card system, a transport system, and a communication apparatus. More specifically, the present invention relates to an IC card system, a transport system, and a communication apparatus transmitting and receiving data to and from a mobile entity to which a non-contact type IC card system is attached and controlling the direction of movement of the mobile entity according to the data.

### Background Art

Recently, non-contact type IC cards (also called high frequency tag: referred to as "IC card" hereinafter) are used as the pass for a ski lift on skiing grounds, the passenger ticket for trains and buses, the commutation ticket, and the tag for administration of parcels and the like. Such IC cards allow confirmation and update of the data in the card without having to present the card and passing it through a reader or the like at the examination stage.

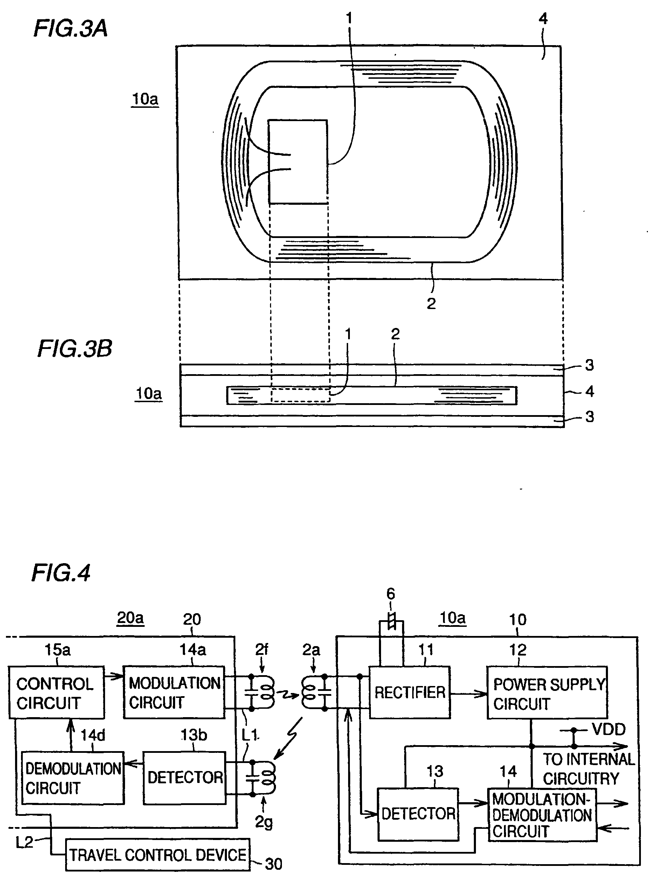

Figs. 3A and 3B show a typical structure of this type of an IC card 10a. Figs. 3A and 3B are perspective diagrams viewed from the top face and side face of IC card 10a. IC card 10a includes a film substrate 1 premounted with a semiconductor device and individual electronic components that will be described afterwards, an antenna coil 2 having a copper wire and the like wound spirally to form an antenna. Film substrate 1 and antenna coil 2 are secured by a resin section 4 formed of plastic resin and the like having a thickness of approximately 0.5-2.0mm. A film 3 approximately 0.1mm in thickness, formed of polyethylene terephthalate (PET) and subjected to a predetermined printing and the like, is attached at the surface of resin section 4. A wiring pattern is printed beforehand at film substrate 1. A semiconductor chip or a semiconductor device such as a microcomputer or memory and individual electronic components such as a resistor and capacitor are mounted at predetermined positions at film substrate 1 to form predetermined circuitry.

Fig. 4 shows an example of a typical structure of a transport system utilizing IC card 10a. The transport system includes IC card 10a having individual data such as the destination, the contents thereof and the like, an interrogator 20a supplying power to IC card 10a to transfer data, and a travel control device 30 constituted by a gate device or a guide display device to control the travel or movement of a mobile unit under control of interrogator 20a according to individual data.

IC card 10a includes a semiconductor device 10 rectifying a received radio wave and transferring data with interrogator 20a, and an antenna unit 2a. Antenna unit 2a is provided external to semiconductor device 10. Antenna unit 2a includes an antenna (tuning) circuit formed of a coil and a capacitor to receive a radio wave. Semiconductor device 10 includes a rectifier 11 to rectify the radio wave received by antenna unit 2a to obtain power, a power supply circuit 12 supplying a predetermined power supply voltage to the internal circuitry of IC card 10a according to the obtained power, a detector 13 detecting the data component of the received wave, a modulation-demodulation circuit 14 to demodulate the received data and to modulate the impedance of the wave from interrogator 20a according to the data to be transmitted, a control device (not shown) such as a microcomputer to process and store the received data, and a storage device (not shown) formed of a non-volatile memory such as a FLASH memory. A capacitor 6 for smoothing is externally provided to rectifier 11.

Power supply circuit 12 will be described in further detail here. Power supply circuit 12 includes a reference voltage generation circuit generating a reference voltage from the obtained power, a voltage clamp circuit comparing the reference voltage with the power supply voltage to set the power supply voltage at a constant value, and a power supply voltage detection circuit providing a signal output to initialize or suppress the operation of IC card 10 when the power supply voltage becomes lower than a predetermined voltage value due to power consumption.

Interrogator 20a includes an interrogator body 20 supplying power to IC card 10a to transfer data for controlling the movement of the mobile unit, an antenna unit 2f formed of a coil and a capacitor to transmit a radio wave, and an antenna unit 2g formed of a coil and a capacitor to receive an impedance-modulated signal from IC card 10a.

Interrogator body 20 includes a modulation circuit 14a to transmit the power and a radio wave which is a demodulation of the data signal to IC card 10a, a detector 13b to detect the wave of a signal from IC card 10a, a demodulation circuit 14d to demodulate data from the detected signal, and a control circuit 15a to process the demodulated data and to provide control of travel control device 30 such as a wicket device according to the processed result. Control circuit 15a is formed of a semiconductor device such as a microcomputer and a memory.

According to the above structure, IC card 10a absent of a battery that functions as a power source receives at antenna unit 2a of IC card 10a the radio wave of several hundred kHz to several MHz in frequency sent from antenna unit 2f of interrogator 20 when passing the proximity of interrogator 20 installed upstream of travel control device 30, and rectifies the received wave with rectifier 11 to charge the capacitor, whereby the required power is obtained. Only when this power is sufficient does power supply circuit 12 generate a predetermined power supply voltage, which is supplied to internal circuitry of IC card 10a. Thus, IC card 10a receives and processes data as well as sending back the processed data.

By using such a communication system, the data contents can be confirmed and modified without forming contact between IC card 10a and interrogator 20a by intercommunication taken advantage of the radio wave. It is no longer required to take out a card from a pocket and the like at every passage through a wicket or to open the window of a vehicle to pass the card through a wicket device such as in the case of the conventional magnetic type card. The time required for examination will be reduced. By such usability, a non-contact type IC card and communication system utilizing the same will further be employed widely such as in the application of a transport system that automatically sorts parcels and in the toll confirmation system of an express highway.

Such a system exchanges information by rectifying the radio wave received at IC card 10a and obtaining power. It was difficult to obtain sufficient power in a short period of time if the distance between IC card 10a and the antenna of the interrogator is great. Although the approach of improving the strength of the wave from the interrogator so as to obtain power in a short time can be considered, interference will occur since an IC card other than the IC card of interest for data communication operates at the same time in such cases. The interval of the mobile units to which respective IC cards are attached can be set to a considerable distance in order to avoid such a problem. However, the workability will be degraded by ensuring such a considerable distance between the IC cards. If measures to prevent interference is taken at the semiconductor device side, the problem of the semiconductor device and the IC card becoming expensive will be imposed.

Furthermore, the attached position of an IC card is often not definite when the size or the shape of the mobile unit differ. It is therefore necessary to install a plurality of antennas at the interrogator to provide control of selectively validating an appropriate one as shown in Japanese Patent Laying-Open No. 7-262332. There is a problem that the interrogator is increased in size and complexity.

The present invention is aimed to solve the above problems. An object is to provide a transport system and the like that allows the distance between an IC card attached to a mobile unit and the antenna unit of the interrogator to be reduced significantly than that of the conventional case, that allows the least required radio wave to be supplied to the IC card that transfers data, and that can efficiently receive/transmit data with almost no interference.

### Disclosure of the Invention

According to an aspect of the present invention to achieve the above object, an IC card system includes a non-contact type IC card absent of a power source, obtaining power to operate by receiving and rectifying a radio wave, and an interrogator with an antenna unit to transmit the radio wave and data to transmit/receive data to/from the IC card. The IC card system is characterized in that the IC card is attached to a mobile unit, and the antenna unit is attached to a react unit that reacts when in contact with the mobile unit.

According to another aspect of the present invention, a transport system includes a mobile unit attached with a non-contact type IC card absent of a power source and rectifying a received radio wave to obtain power to operate, an interrogator with an antenna unit transmitting a radio wave and data to transmit/receive data to/from the IC card, and a travel control device controlling the direction of movement of the mobile unit according to a control signal from the interrogator. The transport system is characterized in that an antenna unit is attached to a react unit that reacts when brought into contact with a mobile unit.

Preferably, the react unit includes a reactant hanging from above the mobile unit as a curtain in strips.

Further preferably, the antenna unit is attached in the proximity of the leading end of a reactant so as to swing upon touching the mobile unit.

Further preferably, the react unit includes a reactant provided in the horizontal direction from the side of the mobile unit.

Further preferably, the antenna unit is attached in the proximity of the leading end of the reactant so as to move in the horizontal direction upon touching the mobile unit.

According to a further aspect of the present invention, a transport system includes a first device for data communication associated with transportation, and a second device. The first device is attached to a mobile unit. The second device includes an antenna unit to communicate with the first device. The antenna unit is configured so as to move when in contact with the mobile unit.

Preferably, the first device includes a non-contact type IC card.

According to still another aspect of the present invention, a communication apparatus communicates with a mobile unit, and includes an antenna to transmit data. The antenna is configured so as to move when touching the mobile unit.

Preferably, the communication apparatus further includes a convey device to transport a mobile unit.

Further preferably, the mobile unit includes an IC card. The IC card is configured so as to be detachable from the mobile unit.

Further preferably, the IC card is a non-contact type IC card.

Further preferably, the communication apparatus further includes a control device controlling the direction of transport of the mobile unit by the convey device.

According to the present invention, the antenna unit easily reacts or deforms when brought into contact with a mobile unit. Accordingly, no excessive stress will be applied on the antenna unit. The antenna unit will not be damaged even when installed so as to come into contact with a mobile unit. Therefore, the distance between the antenna unit and the communication target can be reduced significantly than in the conventional case.

### Brief Description of the Drawings

Fig. 1 is a perspective view showing a transport system in an embodiment of the present invention.
Fig. 2 is a perspective view showing a transport system in another embodiment of the present invention.
Figs. 3A and 3B show a non-contact type IC card.
Fig. 4 is block diagram of a communication system utilizing a non-contact type IC card.

### Best Modes for Carrying Out the Invention

The present invention will be described in further detail with reference to the attached drawings. In the present specification, the description is simplified by allotting the same reference character for the same or similar component throughout the drawings.

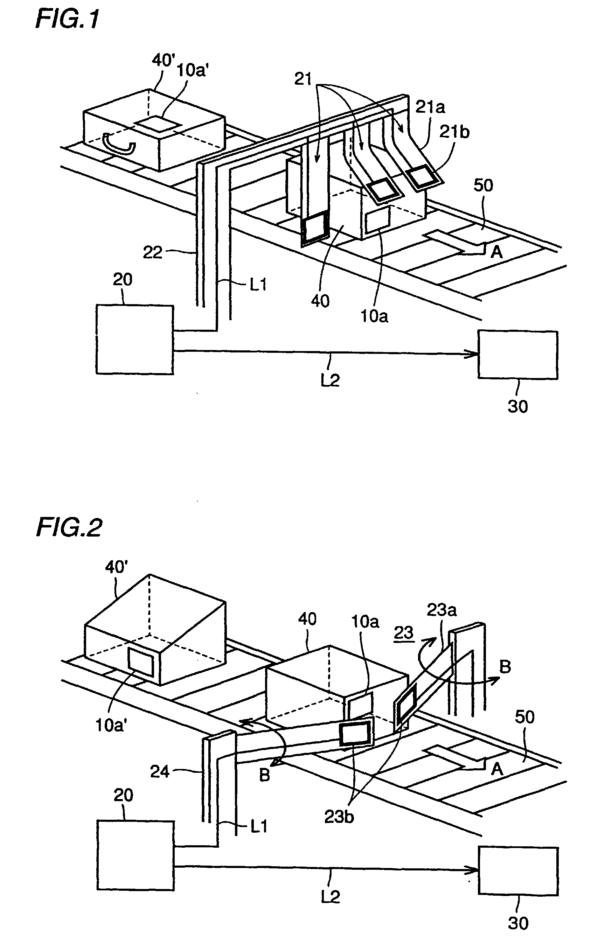

Fig. 1 is a perspective view showing a structure of a transport system according to an embodiment of the present invention. Referring to Fig. 1, the transport system includes IC cards 10a and 10a', an interrogator body 20 to supply power to each IC card and transmit/receive predetermined data, a react unit 21 connected to interrogator body 20 through a line L1 to send/receive data to/from each IC card, a travel control device 30 such as a wicket device or sorter, receiving a signal from interrogator body 20 to control the travel direction of each mobile unit, and a convey device 50 such as a belt conveyer to transport each mobile unit. IC card 10a and 10a' are attached at the side or top face of mobile units 40 and 40' such as a cardboard box or luggage, respectively storing individual data. Each IC card can be fastened to each mobile unit by adhesive means, or by being inserted into a case that is attached to the mobile unit. Alternatively, an IC card can be simply placed on a mobile unit depending upon the shape of the mobile unit. Accordingly, the IC card can be easily detached to be attached to another mobile unit. Thus, reusage of an IC card is facilitated.

A react unit 21 has a deformable reactant 21a formed of rubber or plastic resin like a curtain in strips, hung from the upper section of a support device 22 provided in the convey path of convey device 50. An antenna unit 21b constituting the coil of antenna unit 2f or 2g shown in Fig. 4 is attached at the neighborhood of the leading end of the lower section of reactant 21a. Antenna coil 21b is formed by arranging a metal wire and the like concentrically in the direction of the plane or overlaid in the direction of thickness. Antenna coil 21b is attached at one or both sides of reactant 21a, or formed integrally, embedded in reactant 21a. Reactant 21a can be formed of any material that can be easily deformed, for example, cloth, a metal lamella, paper, and the like. Also, reactant 21a can be formed of a composite material so that a portion thereof excluding antenna unit 21b is deformable.

According to such a structure, the travel of mobile unit 40 in the direction of arrow A in the drawing by convey device 50 causes a portion of react unit 21 to come into contact with mobile unit 40 during the transportation. Accordingly, reactant 21a of react unit 21 is easily deformed or swings like a pendulum. Following the passage of mobile unit 40 from react unit 21, react unit 21 returns to its former position and shape. By such a configuration, react unit 21 will not obstruct the travel of mobile unit 40. The closest approach between each IC card attached at the front or top face of mobile unit 40 and antenna unit 21b can be established almost irrelevant to the shape and size of mobile unit 40. Even if the intensity of the radio wave transmitted from react unit 21 is significantly reduced than in the conventional case, power, data and the like can be sent/received at a speed equal to or greater than the conventional speed. Mobile unit 40 may pass react unit 21 without any physical contact depending upon the shape of mobile unit 40. In this case, each IC card approaches antenna unit 21b within a predetermined distance.

Each IC card attached to respective mobile units operates likewise the conventional case when passing the neighborhood of interrogator body 20. More specifically, the radio wave sent from antenna unit 21b is received on antenna unit 2a of IC card 10a to be rectified by a rectify circuit 11, whereby a capacitor or the like is charged to supply the required power for IC card 10a. By generating a predetermined power supply voltage at a power supply circuit 12, IC card 10a can supply power to internal circuitry. IC card 10a receives on antenna unit 2a interrogation data such as the destination sent from antenna 2f of interrogator body 20 upon receiving or while receiving the power. Then, the data is detected by detector 13 and demodulated by modulation-demodulation circuit 14. A control circuit not shown rewrites data such as the handling time. Other data such as the result or destination is modulated by modulation-demodulation circuit 14 to be sent back to interrogator body 20 via antenna unit 2a.

Interrogator body 20 receives the returned data as an impedance modulation signal at antenna unit 2g. The signal is detected by detector 13b. Demodulation is carried out at demodulation circuit 14d. By processing the data at control circuit 15a, the transportation status of mobile unit 40 can be confirmed. By controlling travel control device 30 according to the destination and the like, mobile unit 40 is transported or halted. Alternatively, interrogator body 20 can modify the data in each IC card again.

Here, it is desirable that the intensity of the radio wave output from antenna unit 21b is set at the least required level that allows operation when IC card 10a approaches antenna unit 21b within a distance range of several 10cm. This provides the advantage that ample power will not be supplied to another IC card 10a attached to a subsequent mobile unit 40' remote from mobile unit 40. Accordingly, there is no possibility of interference since unrequired data will not be transmitted from an IC card other than the relevant IC card 10a at the time when data from IC card 10a is transmitted. Thus, interference can be prevented with a simple configuration in the present embodiment.

Fig. 2 is a perspective view showing a structure of a transport system according to another embodiment of the present invention. In the transport system of the present embodiment, a react unit 23 differs from react unit 21 of Fig. 1 in shape. The remaining component is similar to that of Fig. 1. Therefore, description thereof will not be repeated here. Specifically, a pair of reactants 23a are attached to react unit 23. Reactant 23a is formed of resin and the like that can move in the horizontal direction, such as a double door. Reactant 23a is attached to a support device 24 provided at both sides in the transportation path of convey device 50. An antenna unit 23b corresponding to antenna units 2f and 2g of Fig. 4 is attached at each leading end of each reactant 23a. The material of reactant 23a may be rigid such as a thick wood board or plastic panel, or may be flexible capable of being easily bent like an arch such as a thin plastic panel. Reactant 23a can be arranged at only one side of convey device 50. Alternatively, a plurality of reactants 23a such as a turnstile can be provided around support device 24 to be rotated sequentially at every contact with the mobile unit.

Referring to Fig. 2, the contact of a portion of mobile unit 40 with react unit 23 during its transfer causes each reactant 23b to move so as to open in the direction of B, not to obstruct passage of mobile unit 40. Each reactant 23a is located along the side surface of mobile unit 40 by the force of a spring or the like not shown. Following the passage of mobile unit 40, each reactant 23a returns to its former position by closing. By such an operation, the advantage similar to that of Fig. 1 can be obtained in the present embodiment.

The above embodiment can be implemented by setting the field intensity of the radio wave for power higher than that of the radio wave for data, or by setting the directivity of the radio wave for power more remote than that of the radio wave for data. Such a configuration allows the information data to be exchanged in a short time more efficiently by supplying power required for IC card 10a prior to data transfer. Accordingly, data can be exchanged reliably even in the case where the mobile unit travels at a relatively high speed. A plurality of IC cards can be attached to one mobile unit 40 at a distance that does not cause interference to allow the data from each IC card to be processed in a time-divisional manner by interrogator 20. The mobile unit is not limited to a luggage as in the embodiment, and may be an individual instead. In this case, convey device 50 can be omitted and the direction of travel altered by the mobile entity per se with the display of only information such as the direction of travel by travel control device 30.

The IC card communication system and structure to which the present invention is applied may be similar to that described in the section of the Background Art, although not limited thereto. For example, the number of antennas of interrogator body 20 or IC card 10a can be increased or decreased arbitrarily corresponding to the communication system of the 1-wave or 2-wave system. Furthermore, interference of data can be further reduced by using 13.56 MHz as the radio wave for power and 3.39 MHz as the radio wave for data as to the frequency of the radio wave. Film substrate 1 of IC card 10a can be located at the inner side of antenna coil 2 as shown in Figs. 3A and 3B, or outside antenna coil 2. The present invention is not limited by the position or size of film substrate 1.

Antenna coil 2 can be formed by arranging a thin metal wire concentrically in the plane direction or overlaid in the direction of thickness. Also, antenna coil 2 can be configured so as to form a tabular or tubular pattern on a semiconductor chip. As fixture resin 4 of IC card 10a, thermoplastic polyester resin such as polybutylene terephthalate (PBT) or a resin having insulative property of thermosetting resin such as epoxy resin or phenol resin can be used besides the previously-mentioned plastic resin. Also, a film resistant to the temperature of approximately 150°C can be used in addition to the aforementioned PET for film 3. At least one of the upper or lower film, or both films are dispensible to allow direct printing on resin section 4. Alternatively, film substrate 1 and antenna coil 2 can be attached and accommodated in a resin case with a preformed recess portion.

Semiconductor device 10 can be configured using a one-chip microcomputer incorporating the aforementioned flash memory as a storage device or a nonvolatile memory and the like that can retain the stored data even in the absence of power supply voltage. Also, capacitor 6 can be incorporated in semiconductor device 10.

According to the IC card system, a transport system using the same, and a communication apparatus of the present invention described above, no excessive stress will be exerted on the antenna unit since the react unit including the antenna unit reacts or deforms easily upon contact with a mobile unit. The possibility of the antenna unit being damaged can be eliminated even when the antenna unit is arranged so as to come into contact with the mobile unit. Therefore, the distance between the antenna unit and the IC card can be reduced significantly than that of conventional art. This means that power and data can be supplied at a shorter time than in the conventional art even when the level of the wave output from the antenna unit is reduced significantly than in the conventional case. By supplying only the least power required for operation of the IC card that has to transfer data and by not supplying enough power to other IC cards, transmission of unrequired data from other IC cards can be prevented. Thus, interference with another IC card can be easily reduced. More specifically, the present invention has the advantage of easily providing a transport system improved in convey efficiency by reducing the distance between each mobile unit or increasing the travel speed of each mobile unit in comparison to the conventional case.

### Industrial Applicability

According to the present invention, a transport system that can have efficiency improved can be provided. Therefore, the present invention is advantageously applicable to a transport system and the field handling the same.

## Claims

1. An IC card system including a non-contact type IC card absent of a power source, receiving and rectifying a radio wave to obtain power to operate, and an interrogator having an antenna unit to send said radio wave and data to transfer data to/from said IC card,
characterized in that said IC card is attached to a mobile unit, and said antenna unit is attached to a react unit that reacts when in contact with said mobile unit.

2. A transport system including a mobile unit attached with a non-contact IC card absent of a power source, receiving and rectifying a radio wave to obtain power to operate, an interrogator having an antenna unit to transmit said radio wave and data to transfer data to/from said IC card, and a travel control device controlling a travel direction of said mobile unit according to a control signal from said interrogator,
characterized in that said antenna unit is attached to a react unit that reacts when in contact with said mobile unit.

3. The transport system according to claim 2, wherein said react unit includes a reactant hanging down as a curtain in strips from above said mobile unit.

4. The transport system according to claim 3, wherein said antenna unit is attached in proximity to a leading end of said reactant, and configured to swing when in contact with said mobile unit.

5. The transport system according to claim 2, wherein said react unit includes a reactant provided in a horizontal direction from a side of said mobile unit.

6. The transport system according to claim 5, wherein said antenna unit is attached in proximity to a leading edge of said react unit, and configured so as to travel in a horizontal direction when in contact with said mobile unit.

7. A transport system including a first device for data communication associated with transportation, and a second device, characterized in that
said first device is attached to a mobile unit,
said second device includes an antenna unit to communicate with said first device, and
said antenna unit is configured to move when in contact with said mobile unit.

8. The transport system according to claim 7, wherein said first device includes a non-contact type IC card.

9. A communication apparatus including an antenna to transmit data, and communicating with a mobile unit,
characterized in that said antenna is configured so as to move when in contact with said mobile unit.

10. The communication apparatus according to claim 9, further including a convey device to transport said mobile unit.

11. The communication apparatus according to claim 9, wherein said mobile unit includes an IC card,
said IC card being formed detachable from said mobile unit.

12. The communication apparatus according to claim 11, characterized in that said IC card is a non-contact type IC card.

13. The communication apparatus according to claim 10, further including a control device to control a transport direction of said mobile unit by said convey device.
